# EUROPÄISCHE PATENTSCHRIFT

(11) **EP 1 008 939 B1**
(45) Veröffentlichungstag und Bekanntmachung des Hinweises auf die Patenterteilung: **15.03.2006**
(21) Anmeldenummer: 99124136.5
(22) Anmeldetag: 02.12.1999
(51) Int. Cl.: G06F 12/06

(54) **Selbstkonfigurierendes modulares Elektroniksystem**
Selfconfigurating modular electronic system
Système électronique modulaire autoconfigurant

(30) Priorität: 11.12.1998 DE 19857255
(43) Veröffentlichungstag der Anmeldung: 14.06.2000
(73) Patentinhaber: Brinkhus, Hartmut B., Dr., 69126 Heidelberg (DE)
(72) Erfinder: Brinkhus, Hartmut B., Dr., 69126 Heidelberg (DE)
(74) Vertreter: von Bülow, Tam

(56) Entgegenhaltungen:
- EP-A- 0 166 220
- EP-A- 0 336 708
- US-A- 4 740 916
- US-A- 4 849 752

## Beschreibung

Die Erfindung bezieht sich auf ein selbstkonfigurierendes modulares Elektroniksystem, insbesondere Computersystem gemäß dem Oberbegriff des Patentanspruches 1.

Ein derartiges Elektroniksystem ist aus der US-A-4 740 916 bekannt. Dort ist ein Speichersystem mit einem durchgehenden Adressraum beschrieben, dessen einzelne Speicherkarten bzw. Steckplätze für Speicherkarten über einen Adressbus, einen Datenbus und einen Steuerbus miteinander verbunden sind. Zusätzlich zu den Busleitungen wird dem Speichersystem über eine Leitung eine Startadresse zugeführt. Diese wird an eine erste, der ersten Speicherkarte zugeordnete Adressvergleichseinheit gegeben. Dort wird sie mit einem auf dem Adressbus anliegenden Signal verglichen. Gleichzeitig wird das die Startadresse repräsentierendes Signal an einen Addierer weitergeleitet, der zu der Startadresse die Speicherkapazität der Speicherkarte hinzuaddiert und das Ergebnissignal als Signal für die nächste Adresse der nachfolgenden Speicherkarte zuführt. Dort wird in analoger Weise für die nachfolgenden Speicherkarten verfahren. Wird eine Adressierung eines Speicherplatzes vorgenommen, vergleicht die Adressenvergleichseinheit das auf dem Adressbus anliegende Adress-Signal mit dem auf der Leitung für die Startadresse bzw. die nächste Adresse anliegenden Signal und stellt bei Übereinstimmung fest, daß die gewünschte Speicheradresse auf der zugeordneten Speicherkarte liegt. Damit findet bei diesem System im weitesten Sinne eine Adressierung einzelner Module mit Hilfe von zwischen zwei Speichermodulen angeordneten Addierern, die auch als Arithmetik-Einheiten bezeichnet werden können, statt.

Die Addierer sind unmittelbar auf dem Bus angeordnet und in die Busteilnehmer integriert. Dabei können auch mehrere Busteilnehmer auf einer Platine angeordnet sein.

Die EP-A-0 336 708 beschreibt eine Konfiguration für einen modularen Erweiterungsbus. Auf einer Busleitung wird einer Komponente zur Adressierung ein von einer Steuerung generiertes Adress-Signal mit einer Startadresse zugeführt. In der Komponente wird dann durch Hinzuaddieren einer "1" eine neue Adresse generiert, die der nächsten Komponente als Adresse hinzugeführt wird. Dies wird wiederholt, bis alle Komponenten adressiert sind. Die einzelnen Busteilnehmer können dort in einem Stapel angeordnet sein, wobei jeder Busteilnehmer über einen Stecker mit einem vorherigen Teilnehmer verbunden ist.

Zur Adressierung elektronischer Baugruppen in Computern ist aus der EP 0 491 480 A2 bekannt, eine Anzahl von Busleitungspaaren zwischen aufeinanderfolgenden Steckplätzen nach einem binären Muster zu vertauschen, so daß jeder Steckplatz eine eindeutige Codierung hat. Während einer Initialisierungsphase des Computers wird ein Bitmuster vorgegebener Signale auf die Busleitungspaare auf geschaltet. Durch die Vertauschung der Busleitungspaare erhält jeder Steckplatz dann ein anderes Bitmuster, wodurch jeder Busteilnehmer seinen zugeordneten Steckplatz identifizieren kann und dadurch eine eindeutige Adresse erhält.

Die US 4,727,475 zeigt ein selbstkonfigurierendes modulares Computersystem mit einer Zentraleinheit und mehreren an einen Bus angeschlossenen Modulen. Ein von der Zentraleinheit erzeugtes Aufrufsignal wird von dem der Zentraleinheit am nächsten gelegenen Modul empfangen, welches ein Identifikationssignal auf den Bus gibt, woraus die Zentraleinheit eine Basisadresse für das Modul erzeugt. Dieser Vorgang wird solange wiederholt, bis alle Module eine Busbasisadresse zugewiesen bekommen haben. Dieses System setzt voraus, daß jedes Modul zum Beginn des Adreßzuweisungsvorganges eine individuelle Kennung hat, damit alle Module der Reihe nach individuell angesprochen werden können.

Die DE-33 47 357 A1 beschreibt eine ähnliche Einrichtung zum Vergeben von Adressen an steckbare Baugruppen, bei der jeder Baugruppe eine kennzeichnende Baugruppenkennung eingeprägt ist. Ferner ist jeder Baugruppe eine Steckplatzkennung mitgeteilt. Während einer Initialisierungsphase werden alle Baugruppen über die Steckplatzkennungen aufgerufen und teilen einer Steuereinheit ihre jeweilige Baugruppenkennung mit. Von der Steuereinheit werden daraufhin über Adressierung der Steckplatzkennungen den Baugruppen deren relevante Adresse mitgeteilt, die für den weiteren Datenaustausch verwendet werden.

Die DE-29 32 868 A1 beschreibt eine Datenverarbeitungsschaltungsanordnung mit einer Zentraleinheit, an die mehrere Peripheriegeräte angeschlossen sind. Jede Peripherieeinheit hat einen elektrisch programmierbaren Adreßspeicher, wobei jeder Adreßspeicher über eine eigene nur ihm zugeordnete Freigabeleitung mit einer Zentraleinheit verbunden ist. Über diese Freigabeleitung kann jede einzelne Peripherieeinheit angesprochen werden und von der Zentraleinheit eine Adresse zugewiesen bekommen.

Die DE-39 38 018 C2 zeigt ein Informationsverarbeitungssystem und ein Verfahren zur Bestimmung dessen Konfiguration. Jeder Steckplatz (Slot) für Module hat eigene Anschlüsse, deren Potentialpegel ein "Slot-ID-Signal" verarbeiten, um den jeweiligen Steckplatz individuell ansprechen zu können. Darauf kann jedem Modul an dem entsprechenden Steckplatz von einer Zentraleinheit eine bestimmte Adresse zugewiesen werden.

Die DE-44 21 344 A1 zeigt eine Zusatzkarte für einen Computer, die eine hardwaremäßig vorgegebene digitale Kennung hat. Über diese Kennung kann jede einzelne Zusatzkarte aufgerufen werden und dann von einer Zentraleinheit eine Adresse für ein Bussystem zugewiesen bekommen.

Bei den bekannten Systemen erfolgt die Konfigurierung bzw. die Identifizierung der angeschlossenen Busteilnehmer somit entweder über vertauschte Busleitungen, durch Vergabe unterschiedlicher Initialisierungsadressen an die einzelnen Busteilnehmer oder über zusätzliche Leitungen, die dem jeweiligen Busteilnehmer zugeordnet sind.

Aufgabe der vorliegenden Erfindung ist es, ein selbstkonfigurierendes modulares Elektroniksystem zu schaffen, das einfach aufgebaut ist und bei dem eine Vielzahl adressierbarer Busteilnehmer an einen gemeinsamen Bus angeschlossen werden können, wobei auch alle Baugruppen absolut identisch sein können.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Erfindung liegt die allgemeine Idee zugrunde, ein Identifizierungssignal von Busteilnehmer zu Busteilnehmer weiterzuleiten und bei jedem Weiterleiten in definierter Weise zu verändern. Dadurch erhält jeder Busteilnehmer ein anderes Identifizierungssignal, das ihn eindeutig von den übrigen Busteilnehmern unterscheidet und das z. B. zur Adressierung verwendet werden kann.

Das Verändern erfolgt durch Arithmetik-Einrichtungen, die beispielsweise Volladdierer sein können und die zu dem Identifizierungssignal jeweils ein einer Zahl - z. B. einer "1" - entsprechendes Signal addieren. Das Addition,sergebnis wird an die nächstfolgende Busanschlußstelle bzw. an den nächstfolgenden Busteilnehmer weitergeleitet, so daß jedem Busteilnehmer eine eigene, z. B. um eine "1" erhöhte Adresse (Adressnummer) zugeordnet werden kann.

Die Arithmetik-Einrichtungen können dabei unmittelbar auf dem Bus jeweils zwischen benachbarte Steckplkätze angeordnet und/oder in die einzelnen Busteilnehmer integriert sein.

Die Erfindung kann zur Konfigurierung bzw. Adressierung einzelner Komponenten eines Computersystems wie z. B. einzelner Mikroprozessoren, Netzwerkkarten, Speicherkarten, etc. verwendet werden, die an entsprechenden Busanschlußstellen angeschlossen sind. Es sei jedoch ausdrücklich darauf hingewiesen, daß sich die Erfindung auch bei beliebiger Elektronik anwenden läßt, bei der mehrere zu identifizierende Baugruppen über ein Leitungssystem miteinander verbunden sind.

Vorzugsweise sind an den einzelnen Busanschlußstellen Einrichtungen zum elektrischen Verbinden der Busteilnehmer mit dem Daten- und Adreßbus vorgesehen, wie z. B. Anschlußsockel oder Steckerleisten.

Die räumliche Anordnung der einzelnen Busteilnehmer kann auf unterschiedliche Weise erfolgen. Bei einer Variante sind die Busteilnehmer nebeneinander auf einer Platine in einer Ebene angeordnet. Alternativ dazu ist es auch möglich, mehrere Busteilnehmer stapelartig "übereinander zu stapeln", wobei die einzelnen Busteilnehmer über elektrische Verbindungsmittel, wie z. B. Anschlußsockel, miteinander und mit dem Bus verbunden sind. Eine derartige "dreidimensionale" Anordnung der einzelnen Busteilnehmer ermöglicht eine hohe Packungsdichte und trägt somit zur weiteren Miniaturisierung bei. Ferner ist es möglich, mehrere solcher aus einzelnen Busteilnehmern bestehenden Stapel nebeneinander anzuordnen.

Die einzelnen Busteilnehmer können dabei selbständige Zentraleinheiten, selbständige Computer, Peripheriegeräte, Speichermodule oder ähnliches sein, die alle über ein gemeinsames Bussystem miteinenander kommunizieren. Die einzelnen Module können auch über eine eigene "Intelligenz" verfügen, was aber nicht unbedingt erforderlich ist. Insbesondere ist es möglich, mehrere absolut identische Busteilnehmer zu verwenden.

Im folgenden wird die Erfindung anhand von Ausführungsbeispielen im Zusammenhang mit der Zeichnung ausführlich erläutert. Es zeigen:
- Fig. 1: ein Prinzipschaltbild eines selbstkonfigurierenden modularen Computersystems nach der Erfindung, bei dem die Arithmetik-Einrichtungen unmittelbar auf dem Bussystem angeordnet sind;
- Fig. 2: ein Prinzipschaltbild eines selbstkonfigurierenden modularen Computersystems, bei dem die Arithmetik-Einrichtungen in die Busteilnehmer integriert sind;
- Fig. 3: Busanschlußstellen mit Widerständen zur Signalübertragung bei unbesetzter Busanschlußstelle;
- Fig.4a und +4b: eine Busanschlußklemme;
- Fig. 5: ein Ausführungsbeispiel, bei dem mehrere Busteilnehmer stapelartig übereinander angeordnet sind;
- Fig. 6: ein Prinzipschaltbild eines selbstkonfigurierenden modularen Computersystems, bei dem mehrere Gruppen stapelartig angeordneter Busteilnehmer dargestellt sind;
- Fig. 7a und 7b: ein Ausführungsbeispiel, bei dem die Indentifizierung der Busteilnehmer in zwei Identifizierungs- phasen erfolgt;
- Fig.8a und 8b: weitere Varianten der Erfindung.

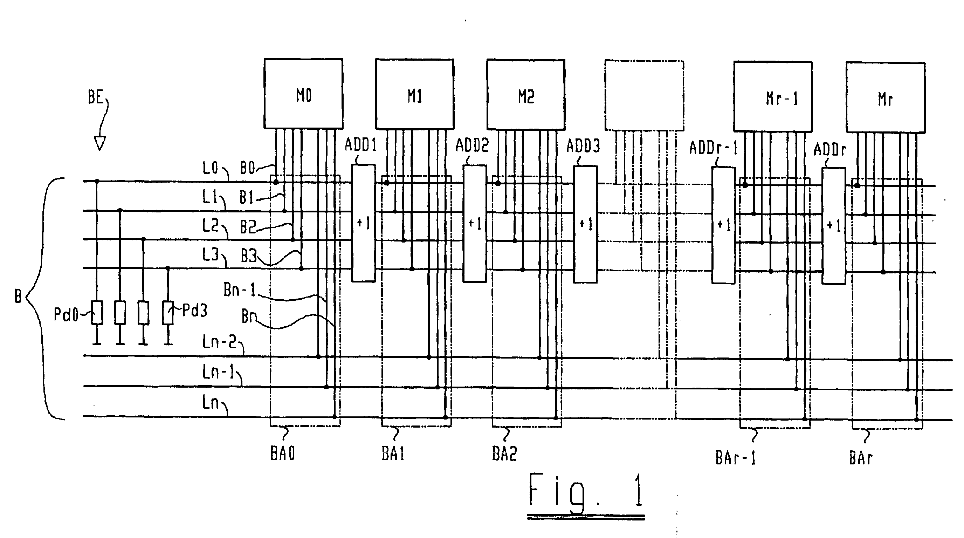

Das Computersystem der Fig. 1 hat ein Bussystem mit einer Anzahl n+1 von Busleitungen L0-Ln die die üblichen Adreß-und Datenleitungen eines Bus B sind. Auf dem Bus B sind Busanschlußstellen BA0-BAr vorgesehen, die beispielsweise durch Steckplätze oder Lötkontakte gebildet sein können, an die Busteilnehmer M0-Mr angeschlossen sind, wobei jeder der Busteilnehmer M0-Mr Teilnehmerleitungen B0-Bn aufweist, die jeweils mit einer zugeordneten Busleitung L0-Ln elektrisch verbunden sind. Ferner ist zwischen jeder der Busanschlußstellen BA0-BAr bzw. zwischen jedem der Busteilnehmer M0-Mr ein Addierer ADD1-ADDr vorgesehen, die mit den Busleitungen L0-L3 elektrisch verbunden sind.

An einem Buseingang BE sind hier sogenannte Pull-down-Widerstände Pd0-Pd3 vorgesehen, die mit Masse verbunden sind und die mit einer zugeordneten Busleitung L0, L1, L2 bzw. L3 verbunden sind.

Zur Identifizierung der Busanschlußstellen der einzelnen Module M0-Mr was z.B. beim Einschalten des Elektronik-Systems erfolgt - liegt an den Busleitungen L0-L3 über die Pull-down-Widerstände Pd0-Pd3 Massepotential, welches einem Signal mit dem Wert "0" entspricht. Dieses Signal mit dem Wert "0" wird über die mit den Busleitungen L0-L3 verbundenen Teilnehmerleitungen B0-B3 dem Busteilnehmer M0 zugeführt, woraus dieser ermittelt, daß er an der Busanschlußstelle BA0 an den Bus B angeschlossen ist.

Gleichzeitig wird das Signal mit dem Wert "0" dem Addierer ADD1 zugeführt, der hier zu dem Signal den Wert "1" addiert. Das erhaltene Signal mit dem Wert "1" wird über die Teilnehmerleitungen B0-B3 dem nächstfolgenden Busteilnehmer M1 und dem Addierer ADD2 zugeführt. Analog zu dem Busteilnehmer M0 bestimmt der Busteilnehmer M1 hieraus, daß er mit der Busanschlußstelle BA1 verbunden ist.

Der Addierer ADD2 addiert zu dem ihm zugeführten Signal, das den Wert "1" hat, ebenfalls den Wert "1", und leitet das erhaltene Signal mit dem Wert "2" an den Addierer ADD3 und an den Busteilnehmer M2 weiter, der hieraus die ihm zugeordnete Busanschlußstelle BA2 identifiziert. Die Identifizierung der Busanschlußstellen der übrigen Busteilnehmer erfolgt in gleicher Weise.

Nach erfolgter Identifizierung der Busanschlußstellen der einzelnen Busteilnehmer M0-Mr können die Busleitungen L0-L3 als "normale" Leitungen verwendet werden.

Alternativ dazu kann den Busteilnehmern ihre Busanschlußstellennummer auch von einem "nachfolgenden" Addierer zugewiesen werden, d.h. dem ersten Busteilnehmer kann durch den Addierer ADD1 die Nummer "1", dem zweiten Busteilnehmer durch den Addierer ADD2 die Nummer "2" etc. zugewiesen werden.

Alternativ zu den gezeigten Addierern ADD1-ADDr, können auch andere Arithmetikeinrichtungen vorgesehen sein, wie z. B. Multiplizierer, wobei jedoch sichergestellt sein muß, daß die durch die Operationen erhaltenen "Ergebnissignale" eindeutig voneinander unterscheidbar sind, so daß eine Identifizierung der Busanschlußstellen möglich ist.

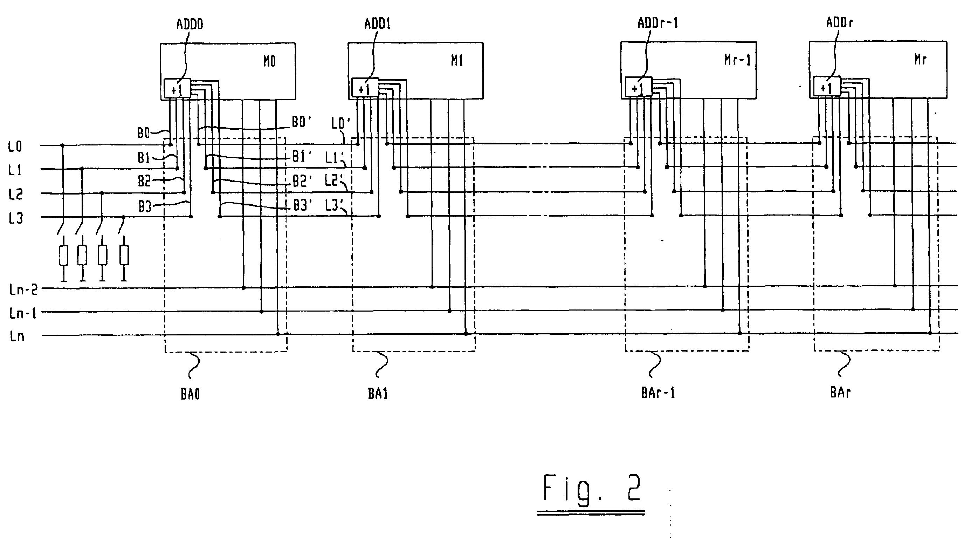

Fig. 2 zeigt ein Ausführungsbeispiel, bei dem die Addierer ADD1-ADDr in die Busteilnehmer M0-Mr integriert sind. Zur Identifizierung der Busanschlußstellen BAO-BAr wird dem Addierer ADD1 des Busteilnehmers M0 über die Teilnehmerleitungen B0-B3 ein Signal mit dem Wert "0" zugeführt. Der Addierer ADD1 addiert zu diesem Signal einen Wert "1" und leitet das erhaltene Signal über Teilnehmerleitungen B0'-B3' bzw. über damit verbundene Busleitungen L0'-L3' an den Addierer ADD1 des nächstfolgenden Busteilnehmers M1 weiter. In gleicher Weise wird das Signal durch die nächstfolgenden Addierer weiterverarbeitet. Die Busteilnehmer M0-Mr bestimmen dann entweder aus den ihnen über die Teilnehmerleitungen B0-B3 zugeführten Signalen oder aus den durch die Additionen erhaltenen Signalen, die über die Teilnehmerleitungen B0'-B3' an den nächstfolgenden Busteilnehmer weitergeleitet werden, ihre jeweilige Busanschlußstelle BA0-BAr.

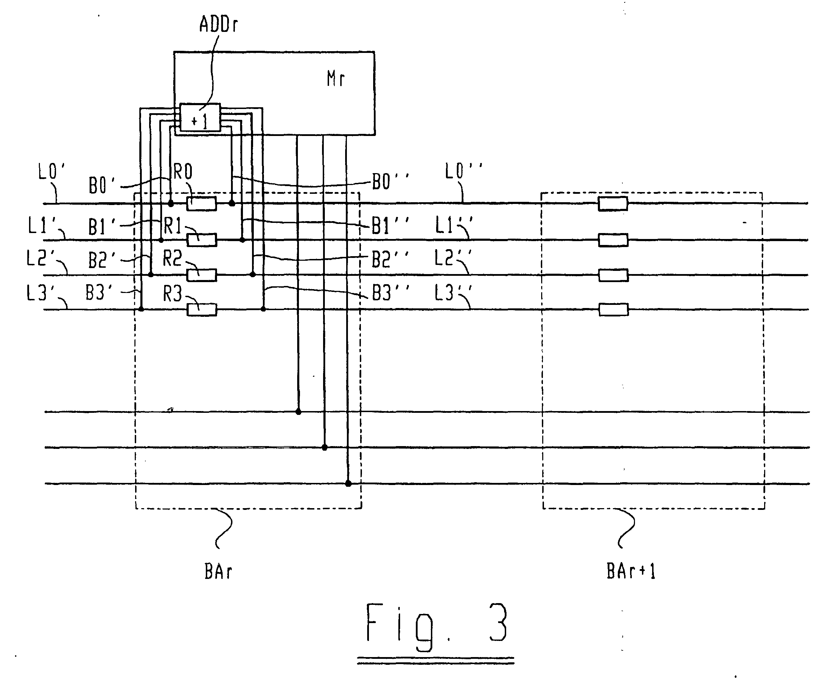

Wenn eine der Busanschlußstellen unbesetzt ist, d. h. wenn z. B. an die Busanschlustelle BA2 kein Busteilnehmer angeschlossen ist, dann muß durch entsprechende Einrichtungen sichergestellt sein, daß die Busleitungen L0'-L3' mit zugeordneten Busleitungew L0''-L3'' elektrisch verbunden sind, so daß die Busteilnehmer Mr-1 und Mr ihre Busanschlußstellen ermitteln können. Dies kann z.B. durch Widerstände R0-R3 erreicht werden, was anhand Fig. 3 erläutert wird.

In Fig. 3 ist an der Busanschlußstelle BAr der Busteilnehmer Mr angeschlossen und die Busanschlußstelle BAr + 1 ist unbesetzt. Im Unterschied zu dem in Fig. 2 gezeigten Ausführungsbeispiel sind in Fig. 3 die Busleitungen L0'-L3' jeweils über einen Widerstand R0-R3 mit den zugeordneten Busleitungen L0"-L3" verbunden, wobei die Widerstände R0-R3 z.B. 1 KOhm-Widerstände sein können. Wenn an eine Busanschlußstelle kein Busteilnehmer angeschlossen ist, leiten die Widerstände R0-R3 die auf den Busleitungen L0'-L3' anliegenden Ausgangssignale der vorhergehenden Busanschlußstelle bzw. des vorhergehenden Busteilnehmers an die Busleitungen L0"-L3 " und somit zur nächstfolgenden Busanschlußstelle bzw. zum nächstfolgenden Busteilnehmer weiter. Ist wie bei der Busanschlußstelle BAr ein Busteilnehmer Mr angeschlossen, so werden die über die Widerstände R0-R3 weitergeleiteten Signale durch die über die Teilnehmerleitungen B0'- B3' bzw. B0'' - B3 " geleiteten Signale überschrieben, da die über den Busteilnehmer Mr weitergeleiteten Signale niederohmiger sind, als die über die Widerstände R0-R3 geleiteten Signale.

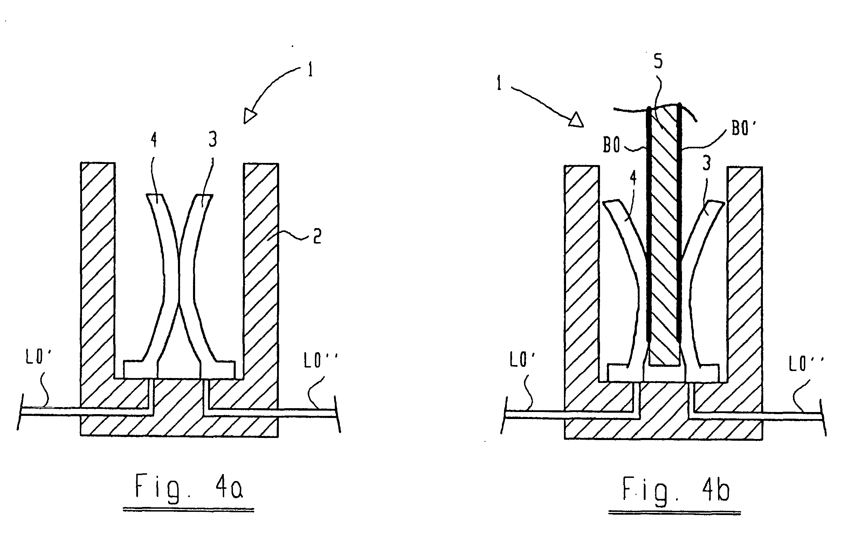

Anstatt der Widerstände R0-R3 können auch Busanschlußklemmen verwendet werden, die in den Fig. 4a und 4b erläutert werden.

Fig. 4a zeigt eine Busanschlußklemme 1 mit einem Gehäuse 2 und zwei elastischen, elektrisch leitfähigen Klemmfedern 3 und 4, die einander berühren und die jeweils mit einer der Busleitungen L0' bzw. L0" verbunden sind. Die Klemmfedern überbrücken also die Busanschlußstelle, wenn diese unbesetzt ist.

Fig. 4b zeigt die Busanschlußklemme 1 einer "besetzten" Busanschlußstelle, wobei ein Anschlußbeinchen 5 des Busteilnehmers M1 (Fig. 2) eingesteckt ist. Das Anschlußbeinchen 5 weist die mit dem Addierer ADD1 verbundenen Teilnehmerleitungen B0 und B0' auf, die über die hier aufgebogenen Klemmfedern 3 bzw. 4 mit den Busleitungen L0' bzw. L0" elektrisch verbunden sind.

Für die räumliche Anordnung der einzelnen Busteilnehmer M0-Mr gibt es mehrere Möglichkeiten. Beispielsweise können die Busteilnehmer, wie in den Fig. 1 und 2 angedeutet, räumlich nebeneinander in einer Ebene angeordnet sein. Alternativ dazu ist aber auch eine dreidimensionale Anordnung der einzelnen Busteilnehmer möglich.

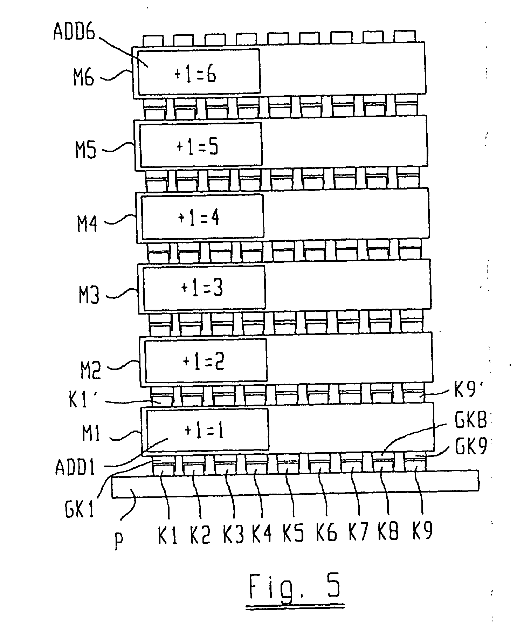

Fig. 5 zeigt ein Ausführungsbeispiel, bei dem mehrere Busteilnehmer M1-M6 stapelartig übereinander angeordnet sind. Auf einer Basisplatine P sind elektrische Kontakte K1-K9 vorgesehen, die mit den einzelnen Busleitungen (nicht dargestellt) verbunden sind. Die Kontakte K1-K9 können beispielsweise durch eine Steckleiste (oder durch einen Sockel gemäß DE 297 08 461 Ul) gebildet sein, die auf einer Hauptplatine des Computers angebracht ist. Der Busteilnehmer M1 weist Gegenkontakte GK1-GK9 auf, die mit den Kontakten K1-K9 der Platine elektrisch verbunden sind. An der den Gegenkontakten GK1-GK9 gegenüberliegenden Seite des Busteilnehmers M1 sind Kontakte K1' bis K9' vorgesehen, die hier entsprechend den Kontakten K1-K9 der Basisplatine P gestaltet sind. Dies ermöglicht die gezeigte stapelartige Anordnung der einzelnen Busteilnehmer.

Ähnlich wie in Fig. 2 dargestellt, sind in die einzelnen Busteilnehmer M1-M6 Addierer ADD1-ADD6 integriert, wobei auch hier jeder Addierer eine "1" addiert, was durch die Additionsterme "+1=2", "+1=3" etc. angedeutet ist. Die Verschaltung der Busteilnehmer M1-M6 bzw. der Addierer ADD1-ADD6 kann analog zu Fig. 2 erfolgen.

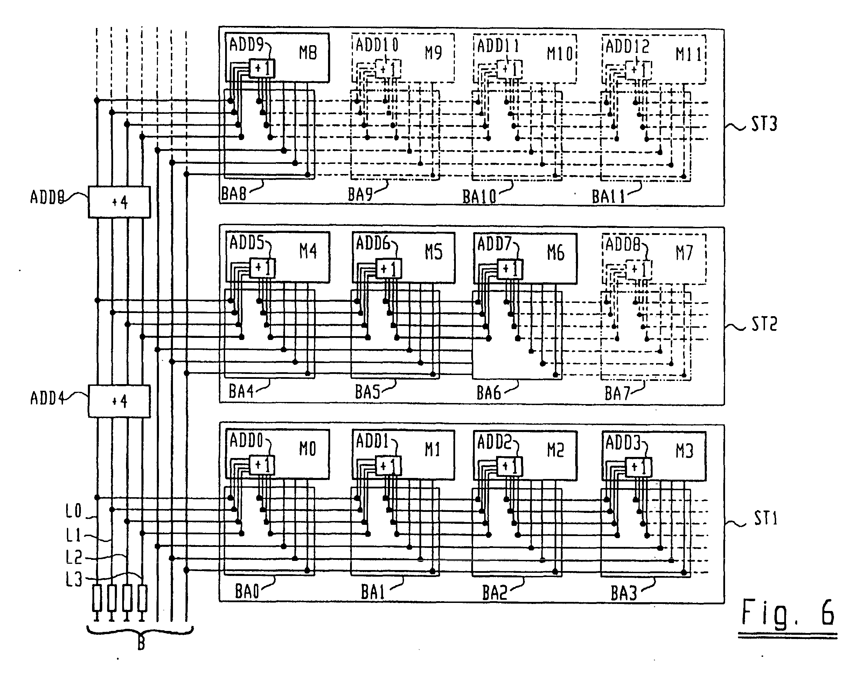

Die in Fig. 5 dargestellte dreidimensionale Anordnung der Busteilnehmer M1-M6 ist sehr platzsparend, was eine weitere Miniaturisierung von Elektroniksystemen ermöglicht. Selbstverständlich ist es möglich, mehrere solcher "Stapel" auf einer Basisplatine anzuordnen, was in der Prinzipschaltskizze der Fig. 6 gezeigt ist.

Fig. 6 zeigt eine Prinzipschaltskizze zur stapelweisen Anordnung von Busteilnehmern, wobei schematisch drei "Stapel" ST1, ST2 und ST3 angedeutet sind, die hier jeweils aus maximal n (gezeigt ist n = vier) Busteilnehmern bestehen. Der Stapel ST1 ist voll "besetzt" und enthält somit vier Busteilnehmer M0-M3, der Stapel ST2 besteht aus drei Busteilnehmern M4-M6 und der "Stapel" ST3 besteht hier nur aus einem Busteilnehmer M8. Die Stapel ST2 und ST3 könnten jedoch ebenfalls wie der Stapel ST1 insgesamt vier Busteilnehmer haben, was durch die mit gestricheltenen Linien gezeichneten Busteilnehmer M7, M9, M10 und M11 angedeutet ist.

Zur Identifizierung der jeweiligen Busanschlußstelle der einzelnen Busteilnehmer sind analog zu Fig. 2 Addierer ADD0-ADD3, ADD5-ADD8 bzw. ADD9-ADD12 vorgesehen, die in die einzelnen Busteilnehmer integriert sind. Während der Identifizierung der Busanschlußstellen wird auf die Busleitungen L0-L3 ein Signal mit dem Wert "0" gegeben, woraus die Busteilnehmer M1-M4 des Stapels 1 entsprechend dem Ausführungsbeispiel der Fig. 2 die jeweilige Busanschlußstelle BAO-BA3 ermitteln.

Gleichzeitig wird das Signal mit dem Wert "0" einem Addierer ADD4 zugeführt, der unmittelbar auf dem Bus B zwischen den beiden Stapel ST1 und ST2 angeordnet ist und der zu dem Signal einen Wert von n ("4") addiert. Das hierdurch erhaltene Signal mit dem Wert "4" wird dem "ersten" Busteilnehmer M4 des Stapels ST2 zugeführt, woraus dieser die ihm zugeordnete Busanschlußstelle BA4 ermittelt und wobei der Addierer ADD5 eine "1" addiert und ein Signal mit dem Wert "5" an den Busteilnehmer M5 weiterleitet. In gleicher Weise ermitteln die Busteilnehmer M5 und M6 die ihnen zugeordneten Busanschlußstellen BA5 bzw. BA6.

Das von dem Addierer ADD4 erzeugte Signal mit dem Wert n ("4") wird ferner einem Addierer ADD8 zugeführt, der ebenfalls einen Wert n ("4") addiert und das erhaltene Signal mit dem Wert 2 n ("8") dem Busteilnehmer M8 des Stapel ST3 zuführt, woraus dieser seine Busanschlußstelle BA8 ermittelt.

Die Zahl, die die Addierer ADD4 bzw. ADD8 zu einem Signalwert addieren, entspricht der maximal vorgesehenen Anzahl an Busteilnehmern eines Stapels, d. h. hier der Zahl n ("4"). Werden Stapel gewünscht, die aus mehr als 4 Busteilnehmern bestehen können, so müssen die Addierer ADD4 und ADD8 entsprechend höhere Zahlen addieren. Hierdurch ist sichergestellt, daß bei einer "Vollbesetzung" der Stapel ST1-ST3 jeder Busteilnehmer seine individuelle Busanschlußstelle ermitteln kann und somit einzeln adressierbar ist.

Bei den in den Fig. 1 bis 6 gezeigten Ausführungsbeispielen, wurden zur Identifizierung nur vier Busleitungen verwendet, nämlich die Busleitungen L0-L3, wobei höchstens 2⁴=16 Busteilnehmer identifiziert werden konnten.

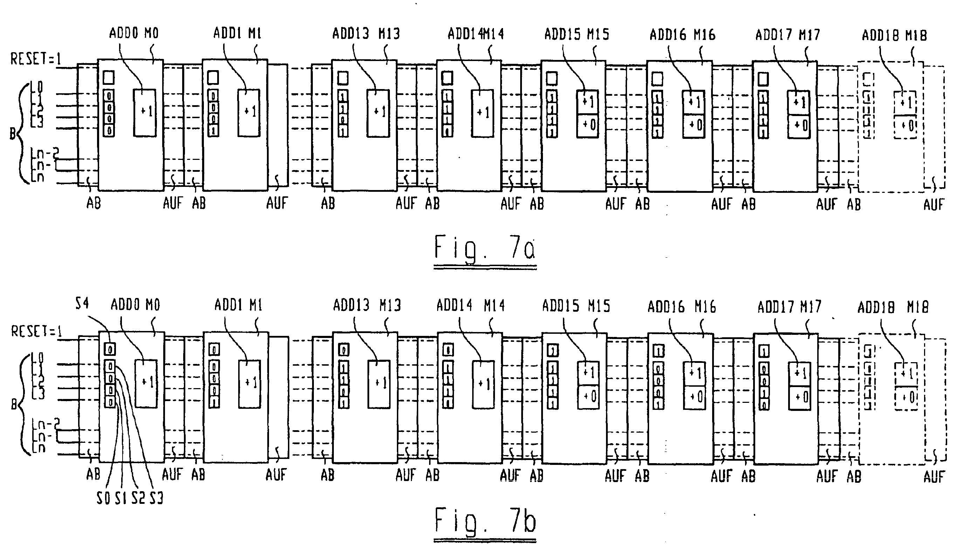

Sollen mehr als 16 Busteilnehmer identifiziert werden, so können entweder zusätzliche Busleitungen vorgesehen werden oder die Identifizierung kann "zweistufig" erfolgen, was im Zusammenhang mit den Fig. 7a und 7b erläutert wird.

Bei dem in den Figuren 7a und 7b gezeigten Ausführungsbeispiel können mit den vier Busleitungen L0-L3 und einer bei herkömmlichen Computersystemen ohnehin vorhandenen Reset-Leitung weitere Busteilnehmer identifiziert werden, d.h man kann ein weiteres Bit "gewinnen", ohne eine zusätzliche Busleitung zu benötigen.

Analog zu den oben erläuterten Ausführungsbeispielen ist jedem der dargestellten Busteilnehmer M0-M18 ein Addierer ADD0-ADD18 zugeordnet, die hier in die Busteilnehmer M0-M18 integriert sind. Ferner hat jeder Busteilnehmer zwei Stecker AB und AUF, wobei jeweils ein AUF-Stecker mit einem AB-Stecker des nächstfolgenden Busteilnehmers zusammengesteckt ist und der AB-Stecker des Busteilnehmers M0 mit den Busleitungen L0-Ln verbunden ist.

Während einer ersten Identifizierungsphase, in der wie in Fig. 7a dargestellt, Reset=1 ist, d.h. die Reset-Leitung aktiv ist, wird dem Busteilnehmer M0 über die Leitungen L0-L3 das digitale Signal "0000" zugeführt, das der Dezimalzahl "0" entspricht. Anschließend wird das Signal an die nächstfolgenden Busteilnehmer weitergeleitet, wobei die Addierer ADD0-ADD14 jeweils eine "1" hinzuaddieren, so daß z. B. dem Busteilnehmer M14 das der Zahl "14" entsprechende digitale Signal "1110" und dem Busteilnehmer M15 das der Zahl "15" entsprechende digitale Signal "1111" zugeführt wird.

Die Addierer ADD16-ADD18 der nächstfolgenden Busteilnehmer M16-M18 addieren in Abhängigkeit von dem Reset-Signal entweder ebenfalls eine "1" oder eine "0". In der ersten Identifizierungsphase, in der Reset=1, addieren die Addierer ADD15-ADD18 eine "0", d.h. das Signal "1111" des Busteilnehmers M15 wird zunächst unverändert an die nächstfolgenden Busteilnehmer M16-M18 weitergeleitet (Fig. 7a) .

Wenn Reset von "1" nach "0" wechselt, d. h. wenn die Reset von aktiv noch inaktiv geht (Fig. 7b), speichern die Module M0 bis M14 in vier unteren Steckplatz-Bits S0-S3 die ihnen zugeführten digitalen Werte, d.h. der Busteilnehmer M0 speichert "0000", M1 speichert "0001" etc. und M14 speichert "1110". Ferner speichern die Busteilnehmer M0-M14 in einem fünften Bit S4 eine "0". Die nächstfolgenden Module M15-M18 speichern hingegen im fünften Bit S4 eine "1".

In einer zweiten Identifizierungsphase, in der Reset=0, d.h. inaktiv ist, werden die Busteilnehmer M15-M18 ermittelt, bei denen im fünften Bit eine "1" gespeichert ist. Anschließend addieren die zugeordneten Addierer ADD15-ADD18 ebenfalls eine "1". Da bei diesem Ausführungsbeispiel nur vier zur Identifizierung verwendete Leitungen L0-L3 vorgesehen sind, entsteht beim Addierer ADD15 ein Überlauf, der zunächst unberücksichtigt bleibt. Der Addierer ADD15 liefert somit an den Busteilnehmer M16 das Signal "0000", dessen Addierer ADD16 erzeugt das Signal "0001" und liefert dieses an M17, dessen Addierer ADD17 erzeugt das Signal "0010" etc. Anschließend speichern die Busteilnehmer M15-M18, bei denen das fünfte Steckplatz-Bit "1" ist, die ihnen über die Busleitungen L0-L3 zugeführten Signale ebenfalls in den unteren Bits "S0-S3" ab.

Mit Hilfe der im fünften Steckplatz-Bit S4 gespeicherten Werte "0" bzw. "1" und der in den unteren vier Steckplatz-Bits S0-S3 gespeicherten Werte ist somit trotz des beim Addierer ADD15 entstehenden Überlaufs eine eindeutige Identifizierung aller Busteilnehmer M0-M18 möglich.

Bei diesem Ausführungsbeispiel können nach Abschluß der Identifizierungsphase die Busleitungen L0-L3 nicht als "normale" Datenleitungen verwendet werden. Eine Verwendung als Datenleitungen ist jedoch möglich, wenn eine zusätzliche Busleitung (nicht dargestellt) vorgesehen ist, die z. B. das Ende der Konfiguration anzeigt.

Ist eine solche zusätzliche Busleitung vorgesehen, so kann jede der vier Leitungen L0-L3 getrennt auf der "AB- und der AUF-Seite" als Ein- oder Ausgang konfiguriert werden. Außerdem kann ein Signal von der einen zur anderen Seite oder auch umgekehrt durchgereicht werden. Es ist auch möglich, daß ein Busteilnehmer M0-M18 beide Seiten (AB und AUF) als Ausgänge schaltet und damit zwei Signale liefert oder sie als Eingänge schaltet und damit zwei Signale empfängt.

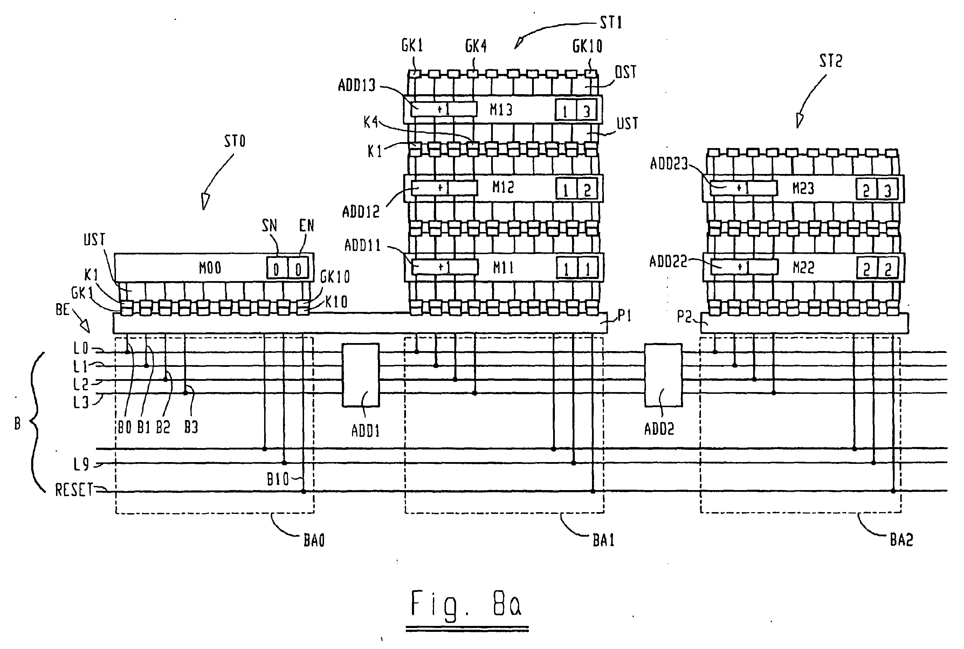

Fig. 8a zeigt eine Variante, bei der zwei Basisplatinen P1 und P2 vorgesehen sind, auf die mehrere Busteilnehmer aufgesteckt sind. Diese Variante wird im folgenden als "Basisplatinen-Variante" bezeichnet. Auf die Basisplatine P1 sind zwei Stapel ST0 bzw. ST1 und auf die Basisplatine P2 ist ein Stapel ST2 aufgesteckt. Während der Stapel ST0 nur aus einem Busteilnehmer M00 besteht, sind die Stapel ST1 bzw. ST2 aus mehreren Busteilnehmern M11, M12 und M13 bzw. M22 und M23 gebildet, die jeweils turmartig aufeienandergesteckt sind. Jeder der in Fig. 8a dargestellten Busteilnehmer weist einen unteren Stecker UST mit Kontakten K1-K10 auf, die analog zum Ausführungsbeispiel der Fig. 5 auf komplementär gestaltete Gegenkontakte GK1-GK10 aufgesteckt sind, wobei die Busteilnehmer M00 und M11 unmittelbar auf die Gegenkontakte GK1-GK10 der Basisplatine P1 und der Busteilnehmer M22 unmittelbar auf die Gegenkontakte GK1-GK10 der Platine 2 aufgesteckt sind.

Die Busteilnehmer der Stapel ST1 bzw. ST2 weisen zusätzlich jeweils einen oberen Stecker OST auf, der entsprechend den Basisplatinen P1 bzw. P2 mit Gegenkontakten GK1-GK10 versehen ist.

Ferner weist jeder Busteilnehmer eine erste Speichereinheit SN und eine zweite Speichereinheit EN auf, wobei der in der Speichereinheit SN gespeicherte Wert die Stapelnummer des jeweiligen Busteilnehmers und der in der Speichereinheit EN gespeicherte Wert die Etagennummer angibt, die zusammen die Steckplatznummern der Busteilnehmer bilden. Der Busteilnehmer M00 beispielsweise gehört dem Stapel "0" an und ist in dessen unterster Etage angeordnet, die hier ebenfalls mit "0" nummeriert ist, woraus sich die Steckplatznummer "00" ergibt. Bei den Stapeln ST1 und ST2 hingegen ist die unterste Etage mit "1" bzw. "2" nummeriert, woraus sich die Steckplatznummern M11 bzw. M22 ergeben. Auf das Zustandekommen dieser Nummerierung wird später näher eingegangen.

Die Busteilnehmer des Stapels ST1 bzw. ST2 weisen analog zu Fig. 5 jeweils einen Addierer auf, die während einer Identifizierungsphase zu einem über die Kontakte K1-K4 an den "nächsthöheren" Busteilnehmer weiterzuleitenden Signal jeweils eine "1" addieren. Beim Busteilnehmer M00 braucht kein Addierer und auch kein oberer Stecker vorgesehen sein, da er hier der einzige Busteilnehmer des Stapels ST1 ist.

Selbstverständlich kann auch bei den "obersten" Busteilnehmern M13 und M23 der Stapel ST1 bzw. ST2 auf die hier dargestellten oberen Stecker OST und auf die Addierer ADD13 bzw. ADD23 verzichtet werden. Es können jedoch auch sämtliche Busteilnehmer entsprechend den Busteilnehmern der Stapel ST1 und ST2 absolut identisch sein.

Die Busteilnehmer M00, M11 und M22 sind jeweils über die Kontakte K1-K10, die Gegenkontakte GK1-GK10 und die Teilnehmerleitungen B0-B10 mit den Busleitungen L0-L9 bzw. mit einer Reset-Leitung des Buses B verbunden. Analog zu Fig. 1 ist jeweils zwischen den einzelnen Busanschlußstellen BA0, BA1 bzw. BA2 ein Addierer ADD1 bzw. ADD2 vorgesehen, die zu einem auf die Busleitungen L0-L3 gelegten Signal eine "1" addieren.

Im folgenden wird die Teilnehmeridentifizierung bei der Basisplatinenvariante erläutert.

In einer ersten Identifizierungsphase, in der die Reset-Leitung in einem Zustand "0" ist, identifizieren die einzelnen Busteilnehmer ihre jeweilige Stapelnummer, auch wenn wie beim Stapel ST0 nur ein Busteilnehmer vorhanden ist. Hierzu wird beim Einschalten des Systems auf die Leitungen L0-L3 z.B. ein Signal mit dem Wert "0" gelegt, das dem Busteilnehmer M00 zugeführt wird und dessen Stapelnummer SN entspricht. Der Addierer ADD1 addiert zu diesem Signal eine "1" und leitet das erhaltene Signal mit dem Wert "1" dem untersten Busteilnehmer M11 des Stapels ST1 über die Teilnehmerleitungen B0-B3 zu. Dieser gibt das erhaltene Signal unverändert an die nächsthöheren Busteilnehmer M12 und M13 seines Stapels ST1 weiter. Gleichzeitig addiert der Addierer ADD2 zu diesem Signal eine "1" und leitet das erhaltene Signal mit dem Wert "2" an die Busteilnehmer M22 bzw. M23 des Stapels ST2 weiter.

Bei der Basisplatinenvariante wird somit jedem Stapel ST0-ST2 eine unterschiedliche Stapelnummer SN zugeführt, die innerhalb eines Stapels über die Kontakte K1-K4 bzw. die Gegenkontakte GK1-GK4 an alle Busteilnehmer des Stapels weitergeleitet wird.

Wenn Reset von "0" auf "1" wechselt, speichert jeder Busteilnehmer mit der positiven Flanke des Reset-Signales seine jeweilige Stapelnummer ab.

In einer zweiten Identifizierungsphase ist Reset=1, was dem normalen Betriebszustand des Elektroniksystems entspricht. In dieser Phase ermitteln die einzelnen Busteilnehmer ihre jeweilige Etagennummer EN. Hierzu kann auf die Busleitungen L0-L3 ein Signal gelegt werden, das z.B. den Wert "0" hat und das dem Busteilnehmer M00 und über die Addierer ADD1 bzw. ADD2 den Busteilnehmern M11 bzw. M22 zugeführt wird. Den untersten Busteilnehmern M11 bzw. M22 der Stapel ST1 bzw. ST2 werden somit die Etagennummern "1" bzw. "2" zugewiesen.

Zu diesen Etagennummern addieren dann die Addierer ADD11-ADD13 bzw. ADD22 und ADD23 jeweils eine "1" und leiten die erhaltenen Werte an die "nächsthöheren" Busteilnehmer des jeweiligen Stapels weiter. So wird z.B. dem zweiten Busteilnehmer M12 des Stapels ST1 vom Addierer ADD11 die Etagennummer 2 zugewiesen.

Dementsprechend würde bei der Basisplatinenvariante beispielsweise dem "untersten" Busteilnehmer eines Stapels mit der Stapelnummer 14 die Etagennummer 14 und dem nächsthöheren Busteilnehmer des Stapels 14 die Etagennummer 15 zugewiesen werden. Der Addierer dieses Busteilnehmers würde dann ebenfalls eine "1" hinzuaddieren, was - wie hier, wo zur Identifizierung nur vier Teilnehmerleitungen B0-B3 verwendet werden - zu einem "Überlauf" führen würde, d.h. zu einer Addition "15+1 = 0". Dem Busteilnehmer in der dritten Etage des 14. Stapels würde somit die Etagennummer 0, dem vierten Busteilnehmer die Etagennummer 1 usw. zugewiesen werden. Eine eindeutige Identifizierung der Busteilnehmer eines Stapels ist also selbst bei einem entstehenden Überlauf möglich, wenn jede Etagennummer innerhalb des Stapels nur einmal vorkommt.

Wenn die Nummerierung der untersten Busteilnehmer jeweils mit "0" beginnen soll, so kann für jeden Stapel ein Subtrahierer vorgesehen sein, der von den Etagennummern die jeweilige Stapelnummer subtrahiert.

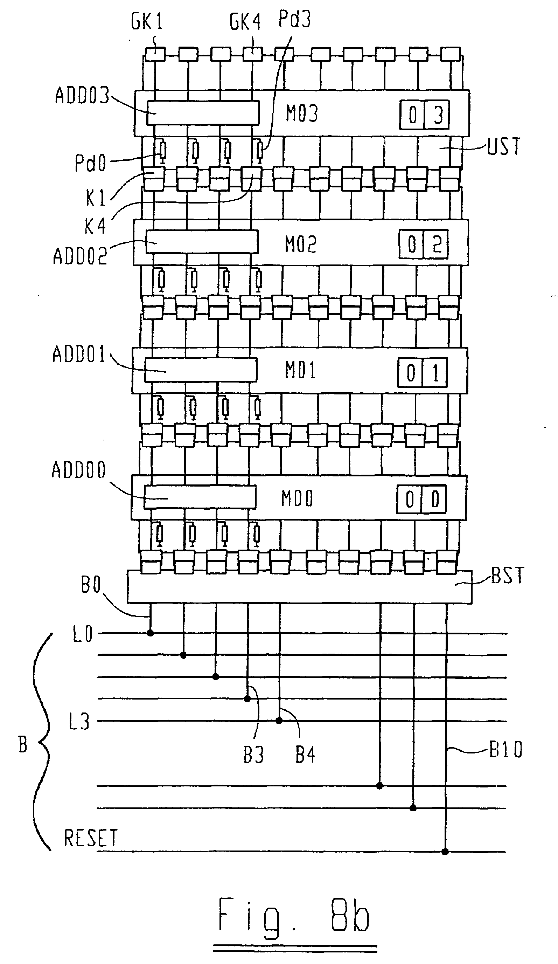

Fig. 8b zeigt eine Variante der Erfindung, bei der sämtliche Module zu einem einzigen Stapel aufeinandergesteckt sind, was im folgenden als "Stapelvariante" bezeichnet wird. Die einzelnen Busteilnehmer M00-M03 entsprechen den Busteilnehmern der in Fig. 8a gezeigten Stapel ST1 bzw. ST2, wobei im Unterschied dazu die Kontakte K1-K4 des unteren Steckers UST eines jeden Busteilnehmers M00-M03 zusätzlich mit je einem Pull-down-Widerstand Pd1-Pd4 verbunden sind. Die Kontakte K1-K4 bzw. die Pull-down-Widerstände Pd1-Pd4 sind über die Addierer ADD00-ADD03 mit den zugeordneten Gegenkontakten GK1-GK4 verbunden. Die übrigen Teilnehmerleitungen B5-B10 sind durch die einzelnen Busteilnehmer M00-M03 "durchgeschleift", d.h. deren Signale werden unverändert von einem Busteilnehmer zum "nächsthöheren" weitergeleitet. Die Teilnehmerleitung B10 ist analog zu Fig. 8a mit einer Reset-Leitung verbunden. Zusätzlich können weitere Bus- bzw. Teilnehmerleitungen vorgesehen sein, worauf hier nicht weiter eingegangen wird. Der unterste Busteilnehmer M00 muß nicht unbedingt auf eine Basisplatine aufgesteckt sein, sondern kann - wie hier dargestellt - über einen Busanschlußstecker BST oder in sonstiger Weise mit dem Bus B verbunden sein.

Alternativ zu dem hier gezeigten Ausführungsbeispiel kann der Bus B auch am "untersten" Busteilnehmer M00 enden, d.h. er kann also auch nur "innerhalb" des Stapels die Busteilnehmer M00-M03 miteinander verbinden.

Im folgenden wird die Identifizierung der einzelnen Busteilnehmer beschrieben.

Nach dem Einschalten des Systems wird in einer ersten Identifizierungsphase, in der Reset gleich "0" ist, die - bei der Stapelvariante - einzige Stapelnummer SN ermittelt, wobei auf den Busleitungen L0-L3 zunächst kein Signal übertragen wird, so daß der unterste Busteilnehmer M00 ein von seinen Pull-down-Widerständen Pd1-Pd4 erzeugtes Signal mit dem Wert "0" erhält, das der Stapelnummer entspricht. Während Reset gleich "0" ist, kann ein Signal ohne Addition, d.h. direkt bzw. unverändert vom unteren Stecker UST zum oberen Stecker OST eines Busteilnehmers weitergeleitet werden. Dann erhalten alle Busteilnehmer M00 - M03 dieselbe Stapelnummer "0".

Wenn Reset von "0" auf "1" wechselt, wird - analog zur Basisplatinenvariante - mit der positiven Flanke des Reset-Signals die Stapelnummer "0" gespeichert und wenn Reset gleich "1" ist, werden die Etagennummern der einzelnen Busteilnehmer ermittelt. Hierzu wird über die Busleitungen L0-L3 bzw. über die Teilnehmerleitungen B0-B3 ein Signal zugeführt, zu dem die Addierer ADD00-ADD03 der einzelnen Busteilnehmer M00-M03 jeweils eine "1" addieren und die erhaltenen Etagennummern speichern. Alternativ dazu kann die Etagennummer des untersten Busteilnehmers auch durch die ihm zugeordneten Pull-down-Widerstände Pd1-Pd4 eingeprägt Werden.

Abschließend sei darauf hingewiesen, daß die Bestimmung einer Stapelnummer bei der Stapel-Variante eigentlich überflüssig ist, da hier ohnehin nur ein Stapel vorhanden ist. Bei manchen Anwendungen ist es jedoch wünschenswert, ein und dieselben Busteilnehmer sowohl für die Stapel-Variante als auch für die oben erläuterte Basisplatinenvariante zu verwenden, weshalb auch hier die Zuweisung einer Stapelnummer vorgesehen ist.

## Patentansprüche

1. Selbstkonfigurierendes modulares Elektroniksystem, insbesondere Computersystem mit einem mehrere Leitungen aufweisenden Daten- und Adreßbus,
mit mehreren adressierbaren Busteilnehmern, die jeweils eine Anzahl von Teilnehmerleitungen aufweisen, wobei an einer Busanschlußstelle eines Busteilnehmers je eine Teilnehmerleitung des Busteilnehmers mit einer zugeordneten Busleitung elektrisch verbunden ist,
wobei Einrichtungen vorgesehen sind, die zu einem vorbestimmten Zeitpunkt ein Identifizierungssignal auf ausgewählte Leitungen des Daten- und Adreßbusses geben, wobei das Identifizierungssignal jeweils von einer vorangehenden Busanschlußstelle an eine nächstfolgende weitergeleitet wird und die einzelnen Busteilnehmer aus dem Identifizierungssignal ihre Busanschlußstelle bestimmen,
wobei jeweils zwischen zwei aufeinanderfolgenden Busanschlußstellen (BA0-BAr) eine Arithmetik-Einrichtung (ADD1-ADDr) vorgesehen ist, die mit dem Identifizierungssignal eine arithmetische Operation durchführt,
**dadurch gekennzeichnet,**
**daß** der Bus (B) genau 2ⁿ ausgewählte und zur identifizierung vorgesehene Busleitungen (L0-L3) aufweist, daß an den Bus (B) mehr als 2ⁿ zu identifizierende Busteilnehmer (M0-M18) angeschlossen sind, wobei sämtliche Busteilnehmer (M0-M18) an eine gemeinsame Reset-leitung angeschlossen sind,
**daß** bei einem ersten Reset-Signalpegel (Reset = 1) das Identifizierungssignal nacheinander den ersten 2ⁿ Busteilnehmern (M0-M15) zugeführt und dabei durch die ihnen zugeordneten Arithmetikeinrichtungen (ADD0-ADD15) verändert wird und die nachfolgenden Arithmetikeinrichtungen (ADD16-ADD18) das Identifizierungssignal zunächst unverändert weiterleiten,
**daß** die ersten 2ⁿ-1 Busteilnehmer (M0-M14) bei einer Änderung des Reset-Signalpegels die ihnen durch das Identifizierungssignal zugeführten Werte und einen zusätzlichen ersten Wert (0) speichern, den die ersten 2ⁿ-1 Busteilnehmer (M0-M14) gemeinsam haben,
**daß** anschließend alle auf den 2ⁿ-1-ten Busteilnehmer (M14) folgenden Busteilnehmer (M15-M18) einen zweiten zusätzlichen Wert (1) speichern, der sich von dem ersten Wert (0) unterscheidet, und
**daß** dann das Identifizierungssignal nacheinander auch den dem 2ⁿ-ten Busteilnehmer (M15) folgenden Busteilnehmern (M16-M18) zugeführt und dabei durch die ihnen zugeordneten Arithmetikeinrichtungen (ADD16-ADD18) verändert wird, wobei die den folgenden Busteilnehmern (M16-M18) durch das Identifizierungssignal zugeführten Werte gespeichert werden.

2. Selbstkonfigurierendes Elektroniksystem nach Anspruch 1, **dadurch gekennzeichnet,**
**daß** der Bus (B) eine Busleitung zum Anzeigen des Endes der Identifizierungsphase aufweist und die ausgewählten Leitungen (L0-L3) nach Abschluß der Identifizierungsphase zur Datenübertragung verwendet werden,
**daß** jeder Busteilnehmer (M0-Mr) einen ersten (AB) und einen zweiten Stecker (AUF) aufweist und die Busteilnehmer (M0-Mr) direkt aneinander gesteckt sind, wobei die Stecker (AB, AUF) wahlweise als Teilnehmereingang bzw. Teilnehmerausgang konfigurierbar sind.

3. Selbstkonfigurierendes Elektroniksystem nach Anspruch 1 oder 2, **dadurch gekennzeichnet,**
**daß** jedem Busteilnehmer (M00, M11-M13, M22, M23) eine Teilnehmernummer zugewiesen ist, die aus einer Stapelnummer (SN) und einer Etagennummer (EN) besteht, wobei die Busteilnehmer (M00, M11-M13, M22, M23) stapelweise aufeinander gesteckt und/oder nebeneinander angeordnet sind,
**daß** bei einem ersten Reset-Signalpegel (Reset = 0) den untersten Busteilnehmern (M00, M11, M22) eines Stapels (ST0-ST2) über ihre Teilnehmerleitungen (B0-B10) ein ihrer Stapelnummer (SN) entsprechendes Signal zugeführt wird, wobei die untersten Busteilnehmer (M00-M22) die Stapelnummern (SN) unverändert an die übrigen Busteilnehmer ihres Stapels (ST0-ST2) weiterleiten, daß die Busteilnehmer bei einer Änderung des Reset-Signalpegels ihre jeweilige Stapelnummer (SN) speichern und
**daß** bei einem zweiten Reset-Signalpegel (Reset = 1) den untersten Busteilnehmern (M00-M22) eines Stapels (ST0-ST2) über ihre Teilnehmerleitungen (B0-B3) ein ihrer Etagennummer (EN) entsprechendes Signal zugeführt wird, das durch die den einzelnen Busteilnehmern der Stapel (ST0-ST2) zugeordneten Arithmetikeinrichtungen (ADD11-ADD13; ADD22-ADD23) verändert und jeweils an den nächsthöheren Busteilnehmer des Stapels (ST0-ST2) weitergeleitet wird.

4. Selbstkonfigurierendes Elektroniksystem nach Anspruch 3, **dadurch gekennzeichnet,**
**daß** jedem Stapel (ST0-ST2) mindestens ein Subtrahierer zugeordnet ist, der von den Etagennummern (EN) der Busteilnehmer eines Stapels (ST0-ST2) jeweils die Stapelnummer (SN) subtrahiert.

5. Selbstkonfigurierendes Elektroniksystem nach einem der Ansprüche 2 bis 4, **dadurch gekennzeichnet,**
**daß** ausgewählte Leitungen der Teilnehmereingänge der Busteilnehmer (M0-Mr) mit Pull-down-Widerständen (Pd0-Pd3) verbunden sind.

6. Selbstkonfigurierendes Elektroniksystem nach Anspruch 1, **dadurch gekennzeichnet,**
**daß** die Arithmetik-Einrichtungen (ADD1-ADDr) Volladdierer sind, die zu dem ihrem Eingang zugeführten Identifizierungssignal einen ganzzahligen Summanden addieren und die Summe als Identifizierungssignal dem ggf. nächsten Busteilnehmer weiterleiten, wobei sich das Ausgangssignal jeder einzelnen Arithmetik-Einrichtung von dem aller übrigen Arithmetik-Einrichtungen unterscheidet.

7. Selbstkonfigurierendes Elektroniksystem nach Anspruch 6, **dadurch gekennzeichnet,**
**daß** der Summand ein Signal ist, das der Zahl "1" entspricht.

8. Selbstkonfigurierendes Elektroniksystem nach einem der Ansprüche 1, 6 oder 7, **dadurch gekennzeichnet, daß** die Arithmetik-Einrichtungen (ADD0-ADDr) unmittelbar auf dem Daten- und Adreßbus (B) angeordnet sind.

9. Selbstkonfigurierendes Elektroniksystem nach einem der Ansprüche 6 oder 7, **dadurch gekennzeichnet,**
**daß** die Arithmetik-Einrichtungen (ADD0-ADDr) in die einzelnen Busteilnehmer (M0-Mr) integriert sind.

10. Selbstkonfigurierendes Elektroniksystem nach einem der Ansprüche 1, 6 bis 9, **dadurch gekennzeichnet, daß** an den Busanschlußstellen (BA0-BAr) Einrichtungen (K1-K9, GK1-GK9) zum elektrischen Verbinden der Busteilnehmer (M0-M8) mit dem Daten- und Adreßbus (B) vorgesehen sind.

11. Selbstkonfigurierendes Elektroniksystem nach Anspruch 1, **dadurch gekennzeichnet,**
**daß** mehrere Busteilnehmer (M0-M8) auf einer Platine (P) in einer Ebene angeordnet sind.

12. Selbstkonfigurierendes Elektroniksystem nach einem der Ansprüche 1, 6 bis 11, **dadurch gekennzeichnet, daß** mehrere Busteilnehmer (M0-M3; M4-M7; M8-M12) stapelartig übereinander angeordnet sind.

13. Selbstkonfigurierendes Elektroniksystem nach Anspruch 12, **dadurch gekennzeichnet,**
**daß** mehrere aus einzelnen Busteilnehmern (M0-M3; M4-M7; M8-M12) bestehende Stapel (ST1-ST3) nebeneinander auf einer Platine angeordnet sind.

## Claims

1. Self-configuring modular electronic system, in particular, a computer system, having a data and address bus with a plurality of lines, with several addressable bus modules that each contain a number of module lines, wherein at a bus connection location of a bus module a module line of the bus module is electrically connected with an assigned bus line, wherein devices are provided, which apply an identification signal to selected lines of the data and address bus at a predetermined time, wherein the identification signal are each routed from a previous bus terminal to a subsequent bus terminal, and wherein the individual bus modules determine their bus terminal from the identification signal,
wherein an arithmetic device (ADD1-ADDr) is arranged between each of two successive bus terminals (BA0-BAr), which performs an arithmetic operation with the identification signal, **characterized in that** the bus (B) contains exactly 2ⁿ selected bus lines (L0-L3) provided for identification purposes,
**in that** more than 2ⁿ bus modules (M0-M18) to be identified are connected to the bus (B), wherein all bus modules (M0-M18) are connected to a common reset line,
**in that** at a first reset signal level (Reset = 1) the identification signal is successively fed to the first 2ⁿ bus modules (M0-M15) and is changed by the arithmetic devices (ADD0-ADD15) assigned to these bus modules and wherein the subsequent arithmetic devices (ADD16-ADD18) initially route the identification signal unchanged,
**in that** the first 2ⁿ-1 bus modules (M0-M14) store the values received with the identification signal and the first additional value (0) that is common to the first 2"-1 bus modules (M0-M14), when the reset signal level changes,
**in that** all bus modules (M15-M18) that follow the 2ⁿ-1 bus module subsequently store a second additional value (1), that differs from the first value (0) and
**in that** the identification signal is then also fed successively to the bus modules (M16-M18) that follow 2ⁿ bus module (M15), wherein the identification signal is changed by the arithmetic devices (ADD16-ADD18) assigned to these bus modules and wherein the values fed to the subsequent bus modules (M16-M18) with the identification signal are stored.

2. Self-configuring electronic system according to claim 1, **characterized in that** the bus (B) contains a bus line for indicating the end of the identification phase and wherein the selected lines (L0-L3) are used for the transmission of data after the completion of the identification phase,
**in that** each bus module (M0-Mr) contains a first (AB) and a second (AUF) plug, and the bus modules (M0-Mr) are plugged directly into one another, wherein the plugs (AB, AUF) are selectively configured as module inputs or module outputs.

3. Self-configuring electronic system according to claim 1 or 2, **characterized in that** each bus module (M00, M11-M13, M22, M23) is assigned a module number that consists of a stack number (SN) and a tier number (EN), wherein the bus modules (M00, M11-M13, M22, M23) are arranged on the top of the other and/or adjacent to one another,
**in that** the lowest bus modules (M00, M11, M22) of a stack (ST0-ST2) receive a signal that corresponds to their stack number (SN) via their module lines (80-B10) at a first reset signal level (Reset = 0),
wherein the lowest bus modules (M00-M22) route the stack number (SN) to the remaining modules of their stacks (ST0-ST2) unchanged, **in that** the bus modules store their respective stack number (SN) when the reset signal level changes and
**in that** the lowest bus modules (M0-M22) of a stack (ST0-ST2) receive a signal that corresponds to their tier number (EN) via their module lines (B0-B3) at a second reset signal level (Rest = 1), wherein said signal is changed by the arithmetic devices (ADD11-ADD13; ADD22-ADD23), that are assigned to the individual modules of the stacks (ST0-ST2) and respectively route the changed signals to the next higher module of the stack (ST0-ST2).

4. Self-configuring electronic system according to claim 3, **characterized in that** at least one subtractor is assigned to each stack (ST0-ST2), wherein that subtractor subtracts the stack number (SN) from the tier numbers (EN) of the modules of a stack (ST0-ST2).

5. Self-configuring electronic system according to one of claims 2 to 4, **characterized in that** selected lines of the module inputs of the bus modules (M0-Mr) are connected to pull-down resistors (Pd0-Pd3).

6. Self-configuring electronic system according to claim 1, **characterized in that** the arithmetic devices (ADD1-ADDr) consist of full adders that add an integral addend to the input identification signal received and rate the sum to the next module if necessary, in the form of an identification signal, wherein the output signal of each individual arithmetic device differs from the output signals of all remaining arithmetic devices.

7. Self-configuring electronic system according to claim 6, **characterized in that** the addend is a signal that corresponds to the number "1".

8. Self-configuring electronic system according to one of claims 1, 6 or 7, **characterized in that** the arithmetic devices (ADD0-ADDr) are arranged directly on the data and adress bus (B).

9. Self-configuring electronic system according to one of claims 1, 6 or 7, **characterized in that** the arithmetic devices (ADD0-ADDr) are integrated into the individual bus modules (M0-Mr).

10. Self-configuring electronic system according to one of claims 1, 6 to 9, **characterized in that** devices (K1-K9, GK1, GK9) for electrically connecting the bus modules (M0-M8) with the data and address bus (B) are provided at the bus terminals (BA0-BAr).

11. Self-configuring electronic system according to claim 1, **characterized in that** several bus modules (M0-M8) are arranged in one plane on a printed-circuit board (P).

12. Self-configuring electronic system according to one of claims 1, 6 to 11, **characterized in that** several bus modules (M0-M3; M4-M7; M8-M12) are stacked one on top of the other.

13. Self-configuring electronic system according to claim 12, **characterized in that** several stacks (ST1-ST3), which consist of individual bus modules (M0-M3; M4-M7; M8-M12) are arranged adjacent to one another on a printed-circuit board.

## Revendications

1. Système électronique modulaire autoconfigurant, notamment système d'ordinateur avec un bus de données et d'adresses présentant plusieurs lignes,
avec plusieurs participants de bus adressables qui présentent respectivement un certain nombre de lignes de participant, chaque ligne de participant d'un participant de bus étant reliée électriquement, en un point de connexion de bus dudit participant de bus, à une ligne de bus correspondante, et des dispositifs étant prévus qui à un instant prédéfini envoient un signal d'identification sur des lignes sélectionnées du bus de données et d'adresses, le signal d'identification étant transmis respectivement, depuis un point de connexion de bus antérieur, à un point de connexion de bus immédiatement suivant, et les participants de bus individuels déterminant leur point de connexion de bus grâce au signal d'identification,
dans lequel un dispositif arithmétique (ADD1-ADCDr) est prévu respectivement entre deux points de connexion de bus successifs (BA0-BAr), lequel dispositif exécute une opération arithmétique avec le signal d'identification,
**caractérisé en ce que**
le bus (B) présente exactement 2ⁿ lignes de bus (L0-L3) sélectionnées et prévues pour l'identification, et plus de 2ⁿ participants de bus à identifier (M0-M18) sont connectés au bus (B), tous les participants de bus (M0-M18) étant connectés à une ligne d'initialisation commune,
à un premier niveau de signal d'initialisation (reset = 1), le signal d'identification est amené successivement aux premiers 2ⁿ participants de bus (M0-M15) et est en même temps modifié par les dispositifs arithmétiques qui leur sont affectés (ADD0-ADD15), et les dispositifs arithmétiques suivants (ADD16-ADD18) transmettent le signal d'identification d'abord sans modification,
en cas de modification du niveau de signal d'initialisation, les premiers 2ⁿ-1 participants de bus (M0-M14) enregistrent les valeurs qui leur sont amenées par le signal d'identification, ainsi qu'une première valeur supplémentaire (0) que les premiers 2ⁿ- 1 participants de bus (M0-M14) ont en commun,
ensuite tous les participants de bus (M15-M18) qui suivent le 2ⁿ-1ème participant de bus (M14) enregistrent une deuxième valeur supplémentaire (1) qui diffère de la première valeur (0), et
le signal d'identification est alors amené successivement également aux participants de bus (M16-M18) qui suivent le 2ⁿème participant de bus (M15) et est en même temps modifié par les dispositifs arithmétiques qui leur sont affectés (ADD16-ADD18), les valeurs amenées par le signal d'identification aux participants de bus suivants (M16-M18) étant enregistrées.

2. Système électronique autoconfigurant selon la revendication 1, **caractérisé en ce que**
le bus (B) présente une ligne de bus pour l'affichage de la fin de la phase d'identification, et les lignes sélectionnées (L0-L3) sont utilisées, après achèvement de la phase d'identification, pour la transmission de données,
chaque participant de bus (M0-Mr) présente un premier connecteur (AB) et un deuxième connecteur (AUF), et les participants de bus (M0-Mr) sont connectés directement bout à bout, les connecteurs (AB, AUF) étant configurables au choix comme entrée de participant ou comme sortie de participant.

3. Système électronique autoconfigurant selon l'une des revendications 1 ou 2, **caractérisé en ce que**
à chaque participant de bus (M00, M11-M13, M22, M23) est affecté un numéro de participant, qui est composé d'un numéro de pile (SN) et d'un numéro d'étage (EN), les participants de bus (M00, M11-M13, M22, M23) étant enfichés l'un sur l'autre en pile et/ou disposés l'un à côté de l'autre,
à un premier niveau de signal d'initialisation (reset = 0), les participants de bus les plus bas (M00, M17:, M22) d'une pile (ST0-ST2) reçoivent un signal amené par leurs lignes de participant (B0-B10) et correspondant à leur numéro de pile (SN), les participants de bus les plus bas (M00-M22) transmettant les numéros de pile (SN) sans modification aux autres participants de bus de leur pile (ST0-ST2), et les participants de bus enregistrent, en cas de modification du niveau de signal d'initialisation, leur numéro de pile respectif (SN), et
à un second niveau de signal d'initialisation (reset = 1), les participants de bus les plus bas (M00-M22) d'une pile (ST0-ST2) reçoivent un signal amené par leurs lignes de participant (B0-B3) et correspondant à leur numéro d'étage (EN), lequel signal est modifié par les dispositifs arithmétiques (ADD11-ADD13 ; ADD22-ADD23) affectés aux participants de bus individuels des piles (ST0-ST2) et est transmis respectivement au participant de bus immédiatement supérieur de la pile (ST0-ST2).

4. Système électronique autoconfigurant selon la revendication 3, **caractérisé en ce que**
à chaque pile (ST0-ST2) est affecté au moins un soustracteur qui soustrait, des numéros d'étage (EN) des participants de bus d'une pile (ST0-ST2), les numéros de pile (SN) respectifs.

5. Système électronique autoconfigurant selon l'une des revendications 2 à 4, **caractérisé en ce que**
des lignes sélectionnées des entrées de participant des participants de bus (M0-Mr) sont reliées à des résistances pull-down (Pd0-Pd3).

6. Système électronique autoconfigurant selon la revendication 1, **caractérisé en ce que**
les dispositifs arithmétiques (ADD1-ADDr) sont des additionneurs complets, qui additionnent au signal d'identification amené à leur entrée une opérande entière et transmettent la somme comme signal d'identification au participant de bus éventuellement suivant, le signal de sortie de chaque dispositif arithmétique individuel étant différent de celui de tous les autres dispositifs arithmétiques.

7. Système électronique autoconfigurant selon la revendication 6, **caractérisé en ce que**
l'opérande est un signal qui correspond au nombre "1".

8. Système électronique autoconfigurant selon l'une des revendications 1, 6 ou 7, **caractérisé en ce que**
les dispositifs arithmétiques (ADD0-ADDr) sont disposés directement sur le bus de données et d'adresses (B).

9. Système électronique autoconfigurant selon l'une des revendications 6 ou 7, **caractérisé en ce que**
les dispositifs arithmétiques (ADD0-ADDr) sont intégrés aux participants de bus individuels (M0-Mr).

10. Système électronique autoconfigurant selon l'une des revendications 1, 6 à 9, **caractérisé en ce que**
aux points de connexion de bus (BA0-BAr) sont prévus des dispositifs (K1-K9, GKI-GK9) pour la liaison électrique des participants de bus (M0-M8) avec le bus de données et d'adresses (B).

11. Système électronique autoconfigurant selon la revendication 1, **caractérisé en ce que**
plusieurs participants de bus (M0-M8) sont disposés dans un même plan sur une platine (P).

12. Système électronique autoconfigurant selon l'une des revendications 1, 6 à 11, **caractérisé en ce que**
plusieurs participants de bus (M0-M3 ; M4-M7 ; M8-M12) sont superposés en pile.

13. Système électronique autoconfigurant selon la revendication 12, **caractérisé en ce que**
plusieurs piles (ST1-ST3) composées de participants de bus individuels (M0-M3 ; M4-M7 ; M8-M12) sont disposées l'une à côté de l'autre sur une platine.
